# DEMANDE DE BREVET EUROPEEN

(11) **EP 1 519 179 A1**
(43) Date de publication de la demande: **30.03.2005**
(21) Numéro de dépôt: 04104565.9
(22) Date de dépôt: 21.09.2004
(51) Int. Cl.: G01M 1/16

(54) **Dispositif pour la détection d'un balourd d'huile dans un rotor, rotor comportant un tel dispositif, et machine équipée d'un tel rotor**

(30) Priorité: 25.09.2003 FR 0350606
(71) Demandeur: SNECMA MOTEURS, 75015 Paris (FR)
(72) Inventeur: Forest, Francis, Robert, 91330, Yerres (FR); Franchet, Michel, François, Raymond, 77240, Pouilly-le-Fort (FR)
(74) Mandataire: Poulin, Gérard

(57) **Abrégé**

Le dispositif pour la détection d'un balourd d'huile à l'intérieur d'un rotor (2) d'une machine comprend des moyens pour entraîner en rotation l'huile (100) présente dans le rotor (2), avec une vitesse de rotation de l'huile sensiblement égale à la vitesse de rotation dudit rotor.

## Description

### DOMAINE TECHNIQUE

La présente invention se rapporte au domaine technique des rotors de machines telles que, notamment, des lignes d'arbre, des turbines, des compresseurs ou des turbomachines. Elle s'applique en particulier aux rotors installés dans les moteurs d'aéronefs.

Plus précisément, l'invention se rapporte aux dispositifs destinés à compenser un balourd d'huile à l'intérieur de tels rotors.

### ETAT DE LA TECHNIQUE ANTERIEURE

Dans le domaine des rotors de machines, on est régulièrement confronté à l'existence de vibrations qui sont générées par un balourd et qui peuvent être très destructrices de pièces.

On distingue les balourds mécaniques et les balourds d'huile.

Un balourd mécanique peut être causé par une perte d'aube ou par une rupture de pièce tournante. Le balourd mécanique tourne avec le rotor à la même vitesse de rotation que celui-ci. La détection d'un balourd mécanique est classiquement effectuée en utilisant au moins un accéléromètre qui est placé sur une partie fixe, comme par exemple un carter ou un support de palier. Cette détection consiste à mesurer les amplitudes vibratoires relevées suivant la fréquence de la vitesse de rotation du rotor, c'est-à-dire sa fréquence fondamentale ou harmonique 1. Si l'amplitude vibratoire mesurée est supérieure à une valeur pré-déterminée, une alarme est déclenchée pour attirer l'attention d'un opérateur, et dans le même temps la machine est automatiquement mise à l'arrêt ou au ralenti pour préserver son intégrité en attendant l'intervention de l'opérateur sur la machine.

Un balourd d'huile est causé par la présence d'huile accumulée dans le rotor. Cette huile provient des pièces lubrifiées, telles que des paliers d'arbre ou des pièces en mouvement, lorsqu'un joint d'étanchéité a été endommagé ou détruit, que ce soit accidentellement ou par usure. L'huile pénètre alors dans le rotor, du fait des pressurisations d'enceintes, et ne peut plus s'en échapper.

On a tenté de percer le rotor, pour que l'huile s'en échappe et soit recueillie dans des enceintes extérieures au rotor, mais cette solution s'avère insatisfaisante, car la présence de trous dans le rotor affaiblit celui-ci au point de diviser par deux ou trois sa durée de vie.

Lorsque de l'huile s'accumule dans le rotor, elle se présente sous la forme d'un film d'huile régulièrement réparti sur la surface interne du rotor. A partir d'une certaine quantité d'huile ainsi accumulée, il se forme une « vague d'huile » qui est entraînée en rotation par la rotation du rotor, avec une vitesse de rotation qui est sensiblement égale à 0,9 fois la vitesse de rotation du rotor. Cette différence entre la vitesse de rotation du rotor et la vitesse de rotation de l'huile est due à la viscosité de l'huile. Le balourd d'huile est causé par le déplacement de cette vague d'huile à l'intérieur du rotor. Il tourne dans le rotor, à une vitesse de rotation différente de la vitesse de rotation du rotor. Un balourd d'huile peut rapidement être la cause de dégâts importants et doit être rapidement détecté. A titre d'exemple, dans le cas de turbomachines utilisées actuellement et pour un dimensionnement usuel, quelques centimètres cubes d'huile seulement peuvent causer un balourd qui génère des vibrations non supportables par la machine.

Une solution simple consisterait à surdimensionner les pièces de manière à augmenter leur résistance aux vibrations, mais cette solution ne peut être retenue pour des raisons d'encombrement, de poids et de coût.

On cherche donc à détecter la présence d'un balourd d'huile dans le rotor, avant que celui-ci n'ait pu provoquer de destruction de pièces.

Une solution simple consisterait à utiliser les appareils de détection de balourds mécaniques qui sont généralement déjà installés sur la machine, pour détecter également les balourds d'huile. Mais une telle solution ne peut être mise en oeuvre, car les appareils de détection de balourds mécaniques sont réglés sur la vitesse de rotation du rotor, alors que la vague d'huile se déplace à une vitesse sensiblement égale à 0,9 fois ladite vitesse de rotation du rotor, et sa présence n'est donc pas détectée par les appareils de détection de balourds mécaniques.

Une autre solution consisterait à équiper la machine d'accéléromètres supplémentaires réglés sur une vitesse sensiblement égale à 0,9 fois la vitesse de rotation du rotor. Mais cette solution est compliquée et onéreuse.

### EXPOSÉ DE L'INVENTION

L'invention se propose de résoudre le problème, évoqué ci-dessus, consistant à détecter la présence d'un balourd d'huile dans un rotor d'une machine, telle qu'une ligne d'arbre, une turbine, un compresseur ou une turbomachine, avant que ce balourd d'huile ne génère de vibrations destructrices du rotor ou d'autres pièces de la machine.

La solution retenue, qui est un objet de la présente invention, consiste à faire tourner l'huile accumulée à l'intérieur du rotor à la même vitesse que celui-ci, puis à utiliser les détecteurs de balourds mécaniques réglés sur la vitesse de rotation du rotor.

Un avantage important de la solution de l'invention réside dans le fait qu'elle permet d'utiliser les appareils de détection des balourds mécaniques, qui sont déjà en place sur la machine.

Selon un premier aspect, l'invention se rapporte à un dispositif pour la détection d'un balourd d'huile à l'intérieur d'un rotor d'une machine, qui comprend des moyens pour entraîner en rotation l'huile présente dans le rotor, avec une vitesse de rotation de l'huile sensiblement égale à la vitesse de rotation dudit rotor.

De préférence, lesdits moyens pour entraîner en rotation l'huile comprennent des moyens pour piéger l'huile contre le rotor par effet centrifuge.

Selon un premier mode de réalisation du dispositif, lesdits moyens pour piéger l'huile sont des compartiments ouverts sur l'intérieur du rotor, formés par la surface interne dudit rotor et par des nervures sensiblement longitudinales disposées sur la surface interne dudit rotor.

Selon un deuxième mode de réalisation du dispositif, lesdits moyens pour piéger l'huile sont des compartiments ouverts sur l'intérieur du rotor, formés par des cavités creusées dans l'épaisseur du rotor à partir de la surface interne de celui-ci.

De manière préférée, les compartiments selon le premier ou le deuxième mode de réalisation sont répartis régulièrement sur la circonférence de la surface interne du rotor.

Selon un troisième mode de réalisation du dispositif, lesdits moyens pour piéger l'huile comprennent un fourreau amovible inséré à l'intérieur du rotor et qui tourne avec le rotor par effet centrifuge, ledit fourreau comportant une goulotte sensiblement longitudinale agencée de manière à faire saillie vers l'intérieur dudit fourreau et des moyens d'équilibrage de ladite goulotte, ainsi que des moyens d'entrée d'huile dans ladite goulotte.

De préférence, lesdits moyens d'entrée d'huile comportent des orifices qui sont agencés sur un même côté de ladite goulotte.

De préférence, ledit fourreau comporte une fente longitudinale disposée de manière sensiblement diamétralement opposée à ladite goulotte, et lesdits moyens d'équilibrage de la goulotte comportent des bords longitudinaux repliés de ladite fente.

Selon un deuxième aspect, l'invention se rapporte à un rotor équipé d'un dispositif pour la détection d'un balourd d'huile selon le premier aspect de l'invention.

Selon un troisième aspect, l'invention se rapporte à une machine équipée d'un rotor selon le deuxième aspect de l'invention. Cette machine peut notamment être un moteur d'aéronef.

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1 illustre, en coupe transversale, un premier mode de réalisation du dispositif selon l'invention ;
- la figure 2 illustre, en coupe transversale, un deuxième mode de réalisation du dispositif selon l'invention ;
- la figure 3 illustre, en coupe transversale et en perspective, un troisième mode de réalisation du dispositif selon l'invention.

### EXPOSÉ DÉTAILLÉ DE MODES DE RÉALISATION PARTICULIERS

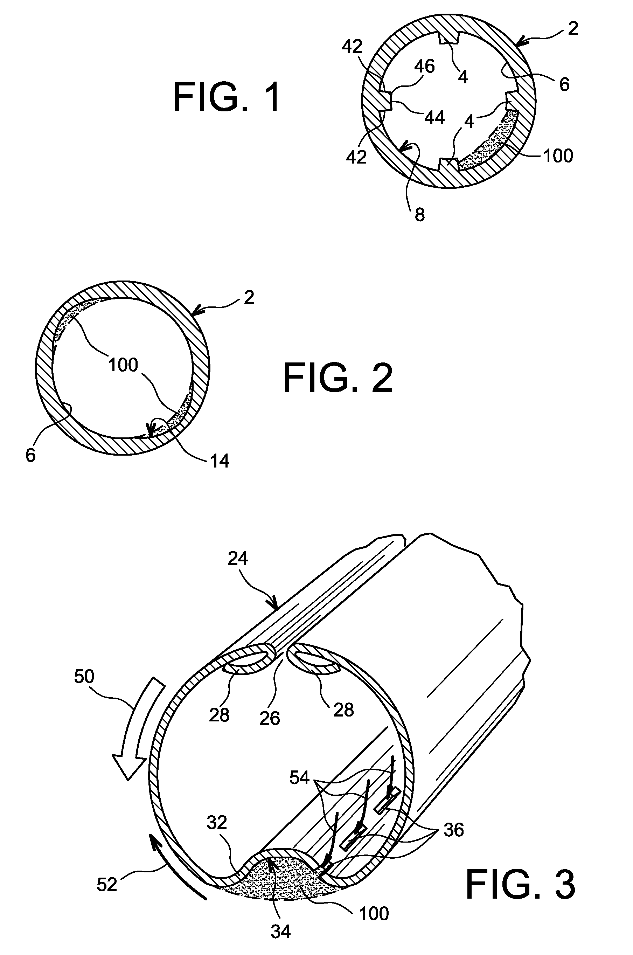

Sur la figure 1 est illustré un dispositif pour la détection d'un balourd d'huile selon le premier mode de réalisation de l'invention. Le rotor 2 est muni de nervures 4 qui sont disposées de manière sensiblement longitudinale et font saillie vers l'intérieur dudit rotor 2. Sur l'exemple illustré, les nervures 4 présentent une section sensiblement quadrangulaire. Elles comportent deux faces latérales 42 qui sont adjacentes à la surface interne 6 du rotor, et une troisième face 44, intermédiaire entre les deux faces latérales 42. La fonction de ces nervures 4 est de créer des compartiments ouverts 8. Chaque compartiment 8 ainsi formé a pour fond une partie de la surface interne 6 du rotor comprise entre deux nervures 4, et pour parois les faces latérales 44 des deux nervures 4 entre lesquelles il se trouve. Lorsqu'une quantité d'huile 100 a pénétré dans le rotor 2, elle reste retenue dans un ou plusieurs compartiments 8 formés entre deux nervures 2. La jonction entre chaque face latérale 42 et la face intermédiaire 44 de chaque nervure 4 est réalisée, sur l'exemple illustré, par une arête 46 qui forme sensiblement un angle droit. On pourrait envisager que ladite jonction dessine un rebord qui prolonge la face intermédiaire 44, de manière à accroître la propriété de rétention d'huile du compartiment.

Sur la figure 2 est illustré un dispositif pour la détection d'un balourd d'huile selon le deuxième mode de réalisation de l'invention. Le rotor 2 est muni de cavités 14 qui sont creusées dans l'épaisseur du rotor 2 en étant ouvertes vers l'intérieur du rotor 2. Sur l'exemple illustré, les cavités 14 présentent une section courbée, qui leur confère sensiblement une forme de lobe. Elles pourraient présenter des formes différentes, choisies en fonction de contraintes de fabrication. Les cavités 14 constituent des compartiments ouverts 14. Lorsqu'une quantité d'huile 100 a pénétré dans le rotor 2, elle reste retenue dans un ou plusieurs compartiments 14 ainsi formés.

Le premier et le deuxième modes de réalisation du dispositif selon l'invention qui viennent d'être décrits sont obtenus tous deux par une modification de la géométrie de la surface interne du rotor 2. Pour le premier mode de réalisation, on a réalisé une adjonction de matière : nervures 4. Pour le deuxième mode de réalisation, on a réalisé un enlèvement de matière : cavités 14. Dans chacun des cas, il est nécessaire de ne pas créer de balourd mécanique supplémentaire, qui pourrait venir se superposer à un balourd d'huile existant. A cet effet, la géométrie du rotor 2 est modifiée tout en restant symétrique. La symétrie est obtenue en créant un nombre pair de compartiments 8, 14 et en les disposant de manière à ce qu'ils soient diamétralement opposés deux à deux. De préférence, ils sont disposés en étant régulièrement répartis sur la circonférence de la surface interne 6 du rotor 2. Leur nombre n'est pas critique. On pourrait ainsi envisager un nombre de nervures 4 différent de quatre, et un nombre de cavités 14 différent de deux.

Cependant, lorsque l'huile est présente en quantité importante relativement aux dimensions du rotor 2, on ne peut pas garantir que la quantité d'huile 100 présente dans le rotor 2 ira se loger de manière uniforme dans les compartiments 8, 14.

Dans une première situation, la répartition de la quantité d'huile 100 n'est pas uniforme, il risque donc de se créer un balourd mécanique, tournant à la même vitesse de rotation que le rotor 2, et nuisible pour la machine.

Dans une deuxième situation, la répartition de la quantité d'huile 100 est uniforme, il ne se crée donc pas de balourd mécanique tant que le rotor 2 est en rotation. Lorsque le rotor 2 s'arrête de tourner, toute la quantité d'huile 100 se rassemble en partie basse du rotor 2, par effet de gravité. Par suite, lorsque le rotor 2 redémarre, on se trouve dans la première situation décrite ci-dessus avec une répartition non uniforme de la quantité d'huile 100, et la création d'un balourd mécanique nuisible.

C'est pourquoi, lorsque la quantité d'huile susceptible de s'accumuler dans le rotor 2 est importante relativement aux dimensions de ce rotor, on préfère utiliser un dispositif pour la détection d'un balourd d'huile selon le troisième mode de réalisation de l'invention, tel qu'illustré sur la figure 3.

Sur la figure 3, on a représenté un fourreau 24, destiné à être inséré de manière amovible à l'intérieur d'un rotor, ledit rotor n'étant pas représenté. Le fourreau 32 est dimensionné de manière à s'ajuster à l'intérieur du rotor et à rester plaqué contre celui-ci par effet centrifuge. Ainsi, au cours de la rotation, le rotor et le fourreau tournent ensemble.

Le fourreau 24 est muni d'une goulotte 32 disposée selon une direction sensiblement longitudinale dudit fourreau 24, et faisant saillie vers l'intérieur de celui-ci. Sur un seul côté de la goulotte 32, et de préférence à proximité de sa base, la goulotte 32 comporte des orifices 36 répartis sur la longueur de celle-ci. Le côté sur lequel se trouvent les orifices 36 est choisi en fonction du sens de rotation du rotor, comme il sera décrit plus loin.

Le fourreau 32 comporte également une fente 26 disposée selon une direction sensiblement longitudinale dudit fourreau 32, en étant diamétralement opposée à la goulotte 32. Les bords 28 du fourreau 24 de part et d'autre de la fente 26 sont repliés sur eux-mêmes, de manière à former une accumulation de matière diamétralement opposée à la goulotte 32.

Le fonctionnement du dispositif selon le troisième mode de réalisation est le suivant. Lors de la rotation du rotor et du fourreau 24, représentée par la flèche 50, l'huile qui arrive dans le rotor se trouve d'abord coincée entre le rotor et le fourreau 24, et elle est entraînée en rotation, comme représenté par la flèche 52, dans le sens inverse du sens de rotation de l'ensemble constitué par le rotor et le fourreau 24. Lorsqu'elle arrive au niveau de la fente 26, l'huile jusque là coincée entre le rotor et le fourreau 24 pénètre dans le fourreau 24 par ladite fente 26. Les orifices 36 de la goulotte 32 sont percés à travers celle-ci sur son côté qui est en amont de la fente 26 si l'on circule selon le sens de rotation de l'ensemble constitué par le rotor et le fourreau 24. Avec ce sens de rotation (flèche 50) et cette position correspondante des orifices 36, l'huile qui a pénétré dans le fourreau 32 va se trouver contre le côté de la goulotte 32 sur lequel sont percés les orifices 36. Par conséquent, l'huile traverse la paroi du fourreau 24 à travers les orifices 36, comme indiqué par les flèches 54. Elle se retrouve alors retenue entre le fourreau 24 et le rotor, dans un compartiment 34 formé entre la goulotte 32 et la partie du rotor qui est en vis-à-vis de la goulotte 34. A l'exception des orifices 36 destinés à l'entrée de l'huile dans le compartiment 34, ce compartiment 34 est un compartiment fermé. L'huile est ainsi retenue, ou piégée. Elle ne peut pas ressortir du compartiment 34 par les orifices 36, puisque la goulotte 34 ne comporte pas d'orifices de sortie sur son côté qui est en aval de la fente 26 si l'on circule selon le sens de rotation de l'ensemble constitué par le rotor et le fourreau 24.

De préférence, les orifices d'entrée d'huile 36 présentent une forme étroite et allongée, de manière à ne pas permettre une sortie d'huile accidentelle à travers eux.

Les bords 28 de la fente 26 sont repliés sur eux-mêmes de telle manière que leur poids équilibre le poids de la goulotte 32 et de la quantité d'huile 100 piégée dans le compartiment 34, de manière à former des moyens d'équilibrage 28 de ladite goulotte 32 et l'huile piégée.

Le dispositif selon le troisième mode de réalisation présente l'avantage de mettre en oeuvre une pièce supplémentaire amovible, le fourreau, sans avoir à modifier la structure et/ou la géométrie du rotor.

Ledit fourreau est de préférence fabriqué à partir d'une tôle cylindrique de section circulaire, qui est emboutie en creux pour former une goulotte longitudinale et qui est fendue pour former une fente longitudinale, la goulotte et la fente étant diamétralement opposées l'une à l'autre, les bords de la tôle de part et d'autre de la fente sont repliés sur eux-mêmes vers l'intérieur de la tôle, et des orifices sont percés sur un seul côté de la goulotte.

## Revendications

1. Dispositif pour la détection d'un balourd d'huile à l'intérieur d'un rotor (2) d'une machine, **caractérisé en ce qu'**il comprend des moyens (4, 8, 14, 24, 34, 36) pour entraîner en rotation l'huile (100) présente dans le rotor (2), avec une vitesse de rotation de l'huile sensiblement égale à la vitesse de rotation dudit rotor.

2. Dispositif selon la revendication 1, **caractérisé en ce que** lesdits moyens (4, 8, 14, 24, 34, 36) pour entraîner en rotation l'huile comprennent des moyens (4, 8, 14) pour piéger l'huile (100) contre le rotor (2) par effet centrifuge.

3. Dispositif selon la revendication 2, **caractérisé en ce que** lesdits moyens (4, 8, 14, 24, 34, 36) pour piéger l'huile comprennent des compartiments (8, 14) répartis régulièrement sur la circonférence de la surface interne (6) du rotor (2).

4. Dispositif selon la revendication 3, **caractérisé en ce que** lesdits compartiments (8) sont des compartiments ouverts sur l'intérieur du rotor (2), formés par la surface interne (6) dudit rotor (2) et par des nervures (4) sensiblement longitudinales disposées sur la surface interne (6) dudit rotor (2).

5. Dispositif selon la revendication 3, **caractérisé en ce que** lesdits compartiments (14) sont des compartiments ouverts sur l'intérieur du rotor (2), formés par des cavités (14) creusées dans l'épaisseur du rotor (2) à partir de la surface interne (6) de celui-ci.

6. Dispositif selon la revendication 2, **caractérisé en ce que** lesdits moyens (4, 8, 14, 24, 34, 36) pour piéger l'huile comprennent un fourreau (24) amovible inséré à l'intérieur du rotor (2) et qui tourne avec le rotor (2) par effet centrifuge, et **en ce que** ledit fourreau (24) comporte une goulotte (34) sensiblement longitudinale agencée de manière à faire saillie vers l'intérieur dudit fourreau (24) et des moyens d'équilibrage (28) de ladite goulotte (34), ainsi que des moyens d'entrée d'huile (36) à travers ladite goulotte (34).

7. Dispositif selon la revendication 6, **caractérisé en ce que** lesdits moyens d'entrée d'huile (36) comportent des orifices (36) qui sont agencés sur un même côté de ladite goulotte (34).

8. Dispositif selon la revendication 6 ou 7, **caractérisé en ce que** ledit fourreau (24) comporte une fente (26) longitudinale disposée de manière sensiblement diamétralement opposée à ladite goulotte (34), et **en ce que** lesdits moyens d'équilibrage (28) de la goulotte (34) comportent des bords longitudinaux (28) repliés de ladite fente (26).

9. Dispositif selon la revendication 8, **caractérisé en ce que** le fourreau (24) est fabriqué à partir d'une tôle cylindrique de section circulaire, qui est emboutie en creux pour former une goulotte longitudinale (34) et qui est fendue pour former une fente longitudinale (26), la goulotte (34) et la fente (26) étant diamétralement opposées l'une à l'autre, les bords de la tôle de part et d'autre de la fente (26) sont repliés sur eux-mêmes vers l'intérieur de la tôle, et des orifices (36) sont percés sur un seul côté de la goulotte (34).

10. Rotor (2), **caractérisé en ce qu'**il est équipé d'un dispositif pour la détection d'un balourd d'huile selon l'une quelconque des revendications 1 à 9.

11. Machine, **caractérisée en ce qu'**elle est équipée d'un rotor (2) selon la revendication 10.
